(19) Europäisches Patentamt
European Patent Office
Office européen des brevets

(11) Veröffentlichungsnummer: **0 137 240**
**B1**

(12) EUROPÄISCHE PATENTSCHRIFT

(45) Veröffentlichungstag der Patentschrift: **25.05.88**

(51) Int. Cl.⁴: **C 09 B 67/22**, C 09 B 1/50, C 09 B 29/085

(21) Anmeldenummer: **84109879.1**

(22) Anmeldetag: **20.08.84**

# (54) Mischungen von Dispersionsfarbstoffen.

(30) Priorität: **31.08.83 DE 3331437**
**25.11.83 DE 3342691**

(43) Veröffentlichungstag der Anmeldung: **17.04.85 Patentblatt 85/16**

(45) Bekanntmachung des Hinweises auf die Patenterteilung: **25.05.88 Patentblatt 88/21**

(84) Benannte Vertragsstaaten: **CH DE FR GB LI**

(56) Entgegenhaltungen:
**DE-A- 2 601 208**
**DE-A- 2 928 432**
**DE-A- 3 043 184**
**FR-A- 1 291 988**
**PATENTS ABSTRACTS OF JAPAN, Band 7, Nr. 219 (C-188)[1364], 29. September 1983**
**PATENTS ABSTRACTS OF JAPAN, Band 7, Nr. 11 (C-145)[1156], 18. Januar 1983**

(73) Patentinhaber: **BAYER AG**
**Konzernverwaltung RP Patentabteilung**
**D-5090 Leverkusen 1 Bayerwerk (DE)**

(72) Erfinder: **Brandt, Horst, Dr.**
**Antoniusstrasse 4**
**D-5068 Odenthal (DE)**
Erfinder: **Gehrke, Günter, Dr.**
**Leopold-Gmelin-Strasse 26**
**D-5000 Koeln 80 (DE)**
Erfinder: **Muders, Rolf, Dr.**
**Ludwig-Aschoff-Strasse 16**
**D-5000 Koeln 80 (DE)**
Erfinder: **Otten, Hans-Günter, Dr.**
**Kurt-Schumacher-Ring 91 A**
**D-5090 Leverkusen 1 (DE)**
Erfinder: **Wiegner, Dieter**
**Nothauser Feld 4**
**D-5068 Odenthal (DE)**

**EP 0 137 240 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung ist eine Mischung aus

a) 60-90 Gew.-% eines bromierten Diamino-dihydroxyanthrachinons der allgemeinen Formel

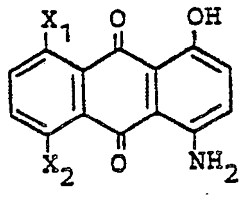

(I)

worin $X_1$ und $X_2$ = OH oder $NH_2$, wobei $X_1 \neq X_2$, mit einem durchschnittlichen Bromgehalt von 5-35, vorzugsweise 10-30 %,

b) 40-10 Gew.-% eines Azofarbstoffs der Formel

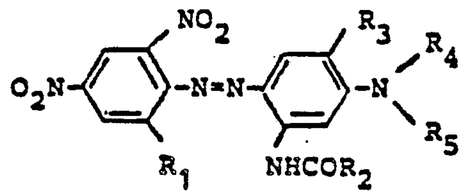

(II)

worin

$R_1$ = Cl oder Br,

$R_2$ = $CH_3$, $C_2H_5$ oder $C_3H_7$,

$R_3$ = H, $OCH_3$ oder $OCH_2CH_2OCH_3$,

$R_4$ = H oder $R_5$ und

$R_5$ = $CH_3$, $C_2H_5$, $C_3H_7$, $CH_2CH_2OCH_3$ oder $CH_2CH = CH_2$,

und

c) 0-10 Gew.-% eines oder mehrerer Nuancierungsfarbstoffe.

Bevorzugte Farbstoffmischungen weisen ein Mischungsverhältnis I : II von 75-85 : 25-15 % (bezogen auf unformierten, trockenen Farbstoff) auf. Ganz besonders bevorzugt ist das Verhältnis 80-84 : 20-16 %.

Als Bestandteile a) und b) können sowohl Einzelfarbstoffe als auch Mischungen verschiedener Farbstoffe der Formeln (I) und (II) eingesetzt werden.

Die Azofarbstoffe (II) sind allgemein bekannt (vgl. EP-A 38 527, EP-A 36 252, BE-A 64 3774, DE-A 29 40 292, 28 18 653, IP-A 49/13479 und US-A 41 85 959).

Ganz besonders bevorzugt sind Farbstoffe der Formel II, worin $R_1$ = Cl oder Br, $R_2$ = $CH_3$ oder $C_2H_5$, $R_3$ = H und $R_4/R_5$ = $C_2H_5$.

Auch die bromierten Anthrachinonfarbstoffe gamäß a) sind bekannt (vgl. US-A 2 990 413).

Bevorzugt sind Bromierungsprodukte des 1,8-Dihydroxy-4,5-diaminoanthrachinon mit den obengenannten Bromgehalten, wobei ein Gehalt von 15-25 % ganz besonders bevorzugt ist.

Besonders vorteilhafte anwendungstechnische Eigenschaften zeigen solche erfindungsgemäßen Farbstoffgemische, die als Komponente a) den vorstehend erwähnten Typ enthalten, den man durch Bromierung eines 1,8-Dihydroxy-4,5-diaminoanthrachinons erhält, das weitgehend frei (d. h. weniger als 10, vorzugsweise weniger als 5 Gew.-%) von β-Substitutionsprodukten ist, wie sie häufig synthesebedingt in technischen Produkten enthalten sind. Die Herstellung solcher reiner Dihydroxydiaminoverbindungen kann beispielsweise gemäß EP-A 00 15 486 erfolgen, wobei man nach der Nitrierung von 1,8-Dihydroxy(dimethoxy)-anthrachinon durch die Wahl bestimmter Säurekonzentrationen die β-Nitrierungsprodukte abscheiden kann und das weitgehend von diesen Verunreinigungen befreite 1,8-Dihydroxy-4,5-dinitroanthrachinon in üblicher Weise reduziert.

Die erfindungsgemäßen Farbstoffmischungen eignen sich hervorragend zum Färben von Polyester- und Cellulosetriacetatfasermaterialien nach üblichen Färbemethoden.

Gewünschtenfalls können die Mischungen noch etwas nuanciert werden, beispielsweise durch Zugabe eines handelsüblichen gelben Dispersionsfarbstoffs. Vorzugsweise beträgt der Anteil der Nuancierungsfarbstoffe maximal 5 Gew.-% (bezogen auf die Gesamtmischung).

Die erfindungsgemäßen Mischungen, insbesondere die bevorzugten Blaumischungen aus Azofarbstoffen der Formel II, worin $R_1$ = Cl/Br ; $R_2$ = $CH_2/C_2H_5$, $R_3$ = H und $R_4/R_5$ = $C_2H_5$ mit den von β-Substitutionsprodukten weitgehend freien, bromierten 1,8-Dihydroxyanthrachinon-Typen mit den besonders bevorzugten Bromgehalten, zeichnen sich durch hohe Färbebadstabilität, gutes Egalisiervermögen und geringe Neigung zum « catalytic fading » aus.

Beispiel 1

Mahlteige der Farbstoffe A und B die jeweils etwa 20 % Farbstoff und 20 % Dispergiermittel auf Ligninsulfonat-Basis enthalten, werden gemeinsam mit weiterem Dispergiermittel auf Liguinsulfonat-Basis, anionischen Netzmitteln, sowie Entstaubungs- und Entschäumungsmitteln sorgfältig vermischt und in einem Sprühtrockner (Eintrittstemperatur : 140 °C ; Austrittstemperatur : 65 °C) getrocknet. Man erhält ein Farbstoffpulver folgender Zusammensetzung :

24,4 % Farbstoff A
4,0 % Farbstoff B
62,0 % Dispergiermittel
0,2 % Netzmittel
0,1 % Entschäumer
0,3 % Entstaubungsmittel
8,1 % Restfeuchte

Ein Polyestergewebe wird bei einem Flottenverhältnis von 1 : 20 in ein Färbebad eingebracht, das neben 1 g/l eines anionischen Dispergiermittels, 1 g/l Mononatriumhydrogenphosphat und Essigsäure (zur Einstellung eines pH-Wertes von 4,5), 1 % der vorstehend beschriebenen Farbstoffpräparation enthält. Man heizt das Bad auf 130 °C auf und färbt bei dieser Temperatur 1-1,5 Stunden. Danach wird die gefärbte Ware gespült und getrocknet.

Man erhält eine gleichmäßige Blaufärbung mit hervorragendem Echtheitsniveau.

Farbstoff A :

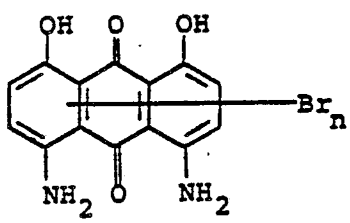

(Bromgehalt ca. 20 %)

Farbstoff B :

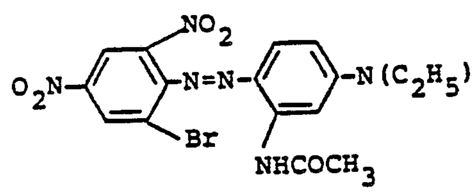

Beispiel 2

Ein Polyestergewebe wird unter den in Beispiel 1 angegebenen Färbebedingungen gefärbt, jedoch enthält die Färbeflotte eine gemäß Beispiel 1 hergestellte Farbstoffmischung bestehend aus (bezogen auf Reinfarbstoffe) : 0,090 % C.I. Disperse Orange 29, 0,0625 % C.I. Disperse Red 82 und 1,04 % der Mischung aus Farbstoff A und B (Verhältnis 6 : 1). Man erhält eine tiefe Marineblaufärbung.

Beispiel 3

Man verfährt wie in Beispiel 2 angegeben, setzt jedoch eine Mischung folgender Zusammensetzung ein :

0,77 % C.I. Disperse Orange 29
0,13 % C.I. Disperse Red 82
0,17 % Mischung aus A und B

Man erhält eine dunkle Braunfärbung.

Beispiel 4

Man verfährt wie in Beispiel 1, verwendet jedoch anstelle des Farbstoffs B den Farbstoff der Formel

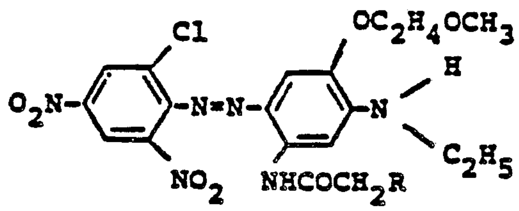

(C)

50 Gew.-% $R = CH_3$

50 Gew.-% $R = C_2H_5$

und zwar in einer solchen Menge, daß der resultierende Farbstoffpulver folgende Zusammensetzung hat :

20,3 % Farbstoff A
10,0 % Farbstoff C
61,0 % Dispergiermittel auf Liguinsulfonat-Basis
0,2 % Entschäumer
0,5 % Entstaubungsmittel
8,0 % Restfeuchte

Der Farbstoff liefert auf Polyester eine Blaufärbung mit hervorragenden Echtheiten.

Beispiel 5

Gemäß Angaben in Beispiel 1 wird ein Farbstoffpulver hergestellt, das folgende Zusammensetzung hat :

19,5 % Farbstoff D
4,0 % Farbstoff B
66,5 % Dispergiermittel
0,2 % Netzmittel
0,1 % Entschäumer
0,4 % Entstaubungsmittel
9,3 % Restfeuchte

Färbt man damit ein Polyestergewebe gemäß Beispiel 1, so erhält man eine völlig egale Blaufärbung.

Farbstoff D :

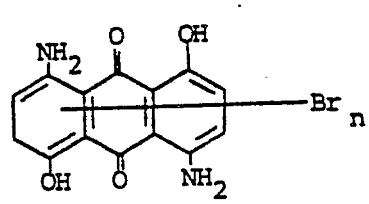

(Bromgehalt etwa 25 %)

Beispiel 6

Eine ebenfalls einwandfreie Blaufärbung erhält man, wenn man eine Farbstoffmischung aus 12 % Farbstoff A, 10 % Farbstoff D, 4 % Farbstoff B, 64 % Dispergiermittel (Rest = Hilfsmittel und Wasser) verwendet.

**Patentansprüche**

1. Farbstoffmischung enthaltend
a) 60-90 Gew.-% eines bromierten Diaminodihydroxyanthrachinons der Formel

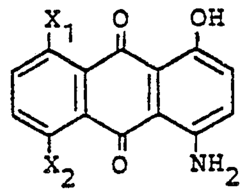

(I)

worin $X_1$ und $X_2$ = OH oder $NH_2$, wobei $X_1 \neq X_2$, mit einem durchschnittlichen Bromgehalt von 5-35, vorzugsweise 10-30 %,

b) 40-10 Gew.-% eines Azofarbstoffs der Formel

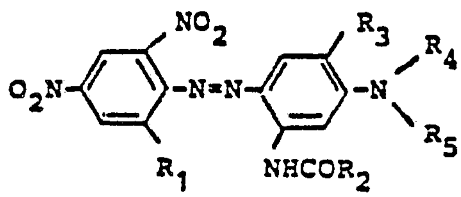

(II)

worin

$R_1$ = Cl oder Br,
$R_2$ = $CH_3$, $C_2H_5$ oder $C_3H_7$,
$R_3$ = H, $OCH_3$ oder $OCH_2CH_2OCH_3$,
$R_4$ = H oder $R_5$ und
$R_5$ = $CH_3$, $C_2H_5$, $C_3H_7$, $CH_2CH_2OCH_3$ oder $CH_2CH = CH_2$,

und

c) 0-10 Gew.-% eines oder mehrerer Nuancierungsfarbstoffe.

2. Farbstoffmischung gemäß Anspruch 1, dadurch gekennzeichnet, daß das Mischungsverhältnis a : b 75-85 : 25-15 Gew.-% beträgt.

3. Farbstoffmischung gemäß Anspruch 1, dadurch gekennzeichnet, daß man als Komponente der Formel I ein bromiertes 1,8-Dihydroxy-4,5-diaminoanthrachinon mit einem durchschnittlichen Bromgehalt von 10-30 %, vorzugsweise 15-25 % einsetzt.

4. Farbstoffmischung gemäß Anspruch 1 oder 3, dadurch gekennzeichnet, daß man als Komponente der Formel I ein bromiertes 1,8-Dihydroxy-4,5-diaminoanthrachinon einsetzt, das weitgehend frei von β-Isomeren ist.

5. Farbstoffmischung gemäß Anspruch 1, dadurch gekennzeichnet, daß man als Komponente der Formel II 2,4-Dinitro-6-brom-2'-acetylamino-4'-(N,N'-diethyl)-amino-1,1'-azobenzol einsetzt.

6. Verwendung der Farbstoffmischung gemäß Anspruch 1, zum Färben und Bedrucken von Polyester- und Cellulosetriacetatfasern.

**Claims**

1. Dyestuff mixture containing

a) 60-90 % by weight of a brominated diaminodihydroxy-anthraquinone of the general formula

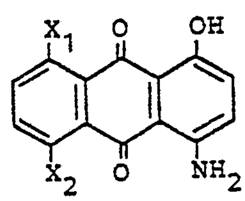

(I)

wherein $X_1$ and $X_2$ = OH or $NH_2$, but $X_1 \neq X_2$, with an average bromine content of 5-35, preferably 10-30 %,

b) 40-10 % by weight of an azo dyestuff of the formula

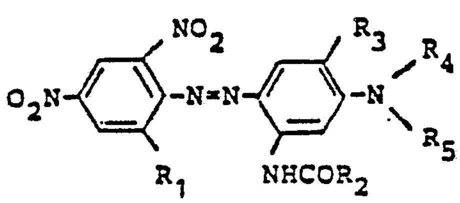

(II)

wherein
$R_1$ = Cl or Br,
$R_2 = CH_3$, $C_2H_5$ or $C_3H_7$,
$R_3$ = H, $OCH_3$ or $OCH_2CH_2OCH_3$,
$R_4$ = H or $R_5$ and
$R_5 = CH_3$, $C_2H_5$, $C_3H_7$, $CH_2CH_2OCH_3$ or $CH_2CH = CH_2$,
and

c) 0-10 % by weight of one or more shading dyestuffs.

2. Dyestuff mixture according to Claim 1, characterized in that the mixing ratio of a : b is 75-85 : 25-15 % by weight.

3. Dyestuff mixture according to Claim 1, characterized in that the component of the formula I is a brominated 1,8-dihydroxy-4,5-diaminoanthraquinone with an average bromine content of 10-30 %, preferably 15-25 %.

4. Dyestuff mixture according to Claim 1 or 3, characterized in that the component of the formula I is a brominated 1,8-dihydroxy-4,5-diaminoanthraquinone which is substantially free of β-isomers.

5. Dyestuff mixture according to Claim 1, characterized in that the component of the formula II is 2,4-dinitro-6-bromo-2'-acetylamino-4'-(N,N'-diethyl)-amino-1,1'-azobenzene.

6. Use of the dyestuff mixture according to Claim 1 for dyeing and printing polyester and cellulose triacetate fibres.

**Revendications**

1. Mélange de colorants contenant

a) 60-90 % en poids d'une diamino-dihydroxyanthraquinone bromée de formule générale

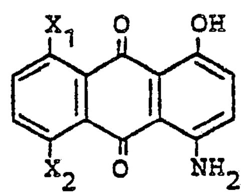

(I)

dans laquelle $X_1$ et $X_2$ = OH ou $NH_2$, où $X_1 \neq X_2$, d'une teneur moyenne en brome de 5-35 %, de préférence 10-30 %,

b) 40-10 % en poids d'un colorant azoïque de formule

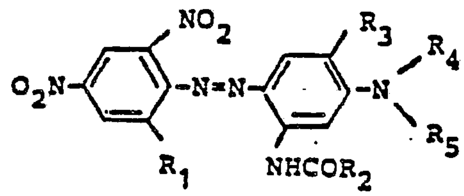

(II)

dans laquelle
$R_1$ = Cl ou Br,
$R_2 = CH_3$, $C_2H_5$ ou $C_3H_7$,
$R_3$ = H, $OCH_3$ ou $OCH_2CH_2OCH_3$,
$R_4$ = H ou $R_5$ et
$R_5 = CH_3$, $C_2H_5$, $C_3H_7$, $CH_2CH_2OCH_3$ ou $CH_2CH = CH_2$,
et

c) 0-10 % en poids d'un ou plusieurs colorants de nuançage.

2. Mélange de colorants selon la revendication 1, caractérisé en ce que le rapport de mélange a : b est de 75-85 : 25-15 % en poids.

3. Mélange de colorants selon la revendication 1, caractérisé en ce que l'on utilise comme composant de formule I une 1,8-dihydroxy-4,5-diaminoanthraquinone bromée ayant une teneur moyenne en brome de 10-30 %, de préférence 15-25 %.

4. Mélange de colorants selon la revendication 1 ou 3, caractérisé en ce que l'on utilise comme composant de formule I une 1,8-dihydroxy-4,5-diaminoanthraquinone bromée qui est totalement exempte d'isomères β.

5. Mélange de colorants selon la revendication 1, caractérisé en ce que l'on utilise comme composant de formule II le 2,4-dinitro-6-bromo-2'-acétylamino-4'-(N,N'-diéthyl)-amino-1,1'-azobenzène.

6. Utilisation du mélange de colorants selon la revendication 1 pour la teinture et l'impression de fibres de polyester et de triacétate de cellulose.